# EUROPEAN PATENT SPECIFICATION

(11) **EP 3 484 594 B1**
(45) Date of publication and mention of the grant of the patent: **01.07.2020**
(21) Application number: 17740787.1
(22) Date of filing: 21.06.2017
(51) Int. Cl.: A63B 21/068, A63B 23/12, A63B 1/00

(54) **A COLLAPSIBLE FREE STANDING EXERCISE APPARATUS**
ZUSAMMENKLAPPBARE FREISTEHENDE ÜBUNGSVORRICHTUNG
APPAREIL D'EXERCICE AUTONOME PLIANT

(30) Priority: 27.08.2016 US 201615249348
(43) Date of publication of application: 22.05.2019
(73) Proprietor: Le Nguyen Khanh, Trinh, Ha Noi (VN)
(72) Inventor: Le Nguyen Khanh, Trinh, Ha Noi (VN)
(74) Representative: Sach, Greg Robert
(86) International application number: PCT/IB2017/053700
(87) International publication number: WO 2018/011650

(56) References cited:
- CH-A5- 621 260
- US-A- 515 461
- US-A- 715 530
- US-A- 1 410 149
- US-A- 2 817 522
- US-A- 2 864 576

## Description

### Technical Field

The present invention relates to an exercise apparatus and more particularly related to a collapsible and portable free standing exercise apparatus for both adults and children.

### Background Art

The body weight exercising devices and methods are widely used to improve the muscle strength and fitness. These body weight exercises generally do not require any free weights and the user's own weight adds resistance to all the movements of the exercise, and therefore these exercises help in achieving better results for the user to improve the balance, flexibility, and strength of the user. Some of the common body weight exercises such as push-up, pull-up, sit-up, dips and chin-up are regularly attempted using cumbersome specialized equipment's or in-built gym equipment's.

Numerous equipment's are required for a person to carry out all of the basic body weight exercises. If a person has to set his own equipment for a circuit of body weight exercises, he has to acquire lot of space and also it is not cost-effective. Further, the equipment should have a configuration to support a user to do all the basic bodyweight exercises without requiring additional accessories. The choice of angle and flexibility to do all the body weight exercises is not easily available in all the prior art systems. Another important requirement for a basic body weight exercising equipment is to provide adaptability for people of all age groups. But in most of the cases, the equipment's are not offering any sort of exercising attributes for children.

Nowadays, people are not frequently visiting the sophisticated gym consistently to improve their fitness as they require a lot of time to invest in this. So it is recognized well to have specialized equipment's in their living space to perform all the body weight exercises. But most of the equipment's are bulky and can incur lot of transportation cost. On the other hand, storage of this equipment's is a major setback as they require enough space to maintain properly. Some equipment's are complex in design and while dismantling, it requires lot of power and time to accomplish. So all the prior art attempts have failed to meet the important factors of a private body weight exercising equipment such as storage space, adaptability for different age groups, transportation, versatility, cost, assembly and disassembly and so on.

Prior art reference US 7125371 B2 discloses an adjustable apparatus for performing bodyweight exercises wherein a pair of side frames and handles with a pendulous member helps performing bodyweight exercises. However, this invention has some shortcomings such as providing flexibility, complex design, adaptability and limited support for user weight and resistance with reduced efficiency of the device. Document US-A-2817522 describes a portable gymnastic device which may be folded.

Prior art reference US 5662556 A discloses a portable pull-up exercise apparatus with welded extendable upright frame bar supports. However, the apparatus does not help in doing all the bodyweight exercises for the people of all age groups.

In some cases, when a user performs a body weight exercise such as a pull-up exercise using a specialized apparatus, the body resistance will act heavily based on the user weight. Also, user performs the exercise in a plurality of styles and intensities which in turn transfer more weight onto the apparatus. This may lead to failure of most of the working parts of the apparatus.

### Summary of Invention

The present invention relates to a lightweight, easy to use, portable and collapsible free standing exercise apparatus as claimed in claim 1 to perform a plurality of body weight exercises such as pull-ups, chin-ups, etc., and a method of assembling the apparatus as claimed in claim 10.

The collapsible free standing exercise apparatus comprises a pair of hollow vertical bars separated at a predetermined distance via a connector bars removably fastened at a lower portion of each hollow vertical bar on opposing pairs of the hollow vertical bars, wherein the hollow vertical bars are inclined to each other within the pair, wherein an upper vertex joint is defined between each hollow vertical bar. A first handle bar removably fastened to each vertex joint on each pair of hollow vertical bars, wherein the first handle bar is used by a first user to perform body weight exercises and a second handle assembly is removably fastened between each pair of hollow vertical bars at a predetermined position which is used by a second user to perform body weight exercises. A support section disposed at distal ends of the second handle bar is removably fastened across each hollow vertical bar within the pair. An adjustable bar is also provided with collapsible sections fixedly fastened to each hollow vertical bar within the pair at another predetermined position to adjust a distance between each hollow vertical bar within the pair.

In other embodiments, a method of assembling a collapsible free standing exercise apparatus for use is disclosed. The method comprises the steps of removably fastening a pair of hollow vertical bars separated at a predetermined distance via a connector bars, wherein the hollow vertical bars are inclined to each other within the pair, wherein an upper vertex joint is defined between each hollow vertical bar and removably fastening a first handle bar to each vertex joint on each pair of hollow vertical bars, wherein the first handle bar is used by a first user to perform body weight exercises. A second handle assembly is removably fastened to between each pair of hollow vertical bars at a predetermined position. The method also comprises fixedly fastening an adjustable bar with collapsible sections to each hollow vertical bar within the pair at another predetermined position to adjust a distance between each hollow vertical bar within the pair.

Other objects, features and advantages of the present invention will become apparent from the following detailed description. It should be understood, however, that the detailed description and the specific examples, while indicating specific embodiments of the invention, are given by way of illustration only.

### Brief Description of Drawings

[fig.1] Figure 1 shows a front view of a collapsible free standing exercise apparatus with a first handle bar and a second handle assembly are assembled, according to an embodiment of the present invention.
[fig.2] shows the front view of the collapsible free standing exercise apparatus with thed handle assembly removed from the apparatus, according to an embodiment of the present invention.
[fig.3] shows a method of assembling the collapsible free standing exercise apparatus for use, according to an embodiment of the present invention.
[fig.4] shows the front view of the collapsible free standing exercise apparatus in a folded state, according to an embodiment of the present invention.
[fig.5] shows the front view of hollow vertical bars connected to each other by a vertex joint of the collapsible free standing exercise apparatus, according to one embodiment of the present invention.
[fig.6] shows a ground engaging cushion member attached to each hollow vertical bar and the connector bars of the collapsible free standing exercise apparatus, according to one embodiment of the present invention.
[fig.7] shows a ground engaging cushion member attached to each hollow vertical bar and the connector bars of the collapsible free standing exercise apparatus, according to one embodiment of the present invention.
[fig.8] shows an adjustable bar with a screw and collapsible sections of the collapsible free standing exercise apparatus, according to one embodiment of the present invention.
[fig.9] shows an adjustable bar with a screw and collapsible sections of the collapsible free standing exercise apparatus, according to one embodiment of the present invention.

### Description of Embodiments

A description of embodiments of the present invention will now be given with reference to the Figures. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

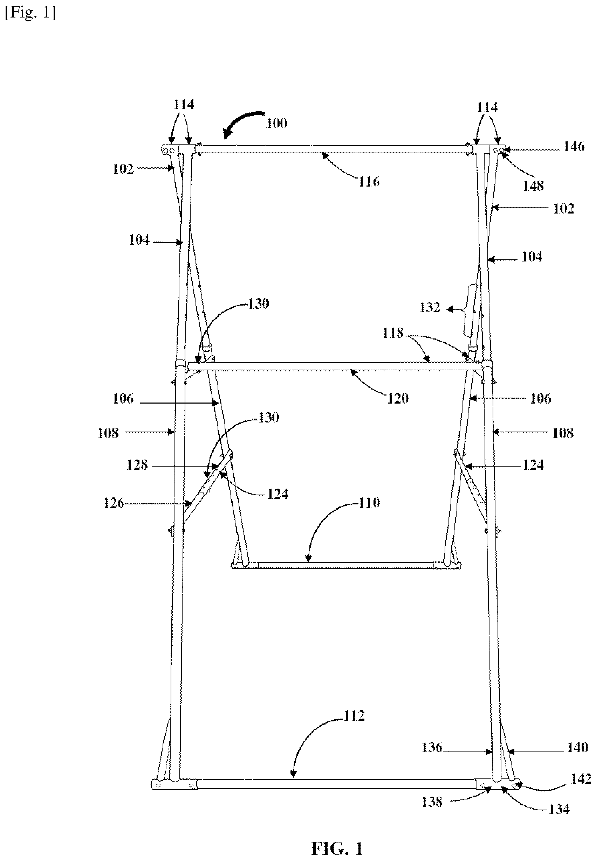

Referring to **FIG. 1****,** which shows a front view of a collapsible free standing exercise apparatus **100** with a first handle bar **116** and a second handle assembly **118** assembled to the frame, according to a preferred embodiment of the proposed invention. The collapsible free standing exercise apparatus **100** comprises a pair of hollow vertical bars ( **102, 104, 106** and **108)** separated at a predetermined distance via connector bars (**110** and **112**) removably fastened at a lower portion of each hollow vertical bar **(106** and **108)** on opposing pairs of the hollow vertical bars **(102, 104, 106** and **108**), wherein the hollow vertical bars **(102, 104, 106** and **108)** are inclined to each other within the pair, wherein an upper vertex joint **114** is defined between each hollow vertical bar ( **102** and **104**). The collapsible free standing exercise apparatus **100** further comprises a first handle bar **116** removably fastened to each vertex joint **114** on each pair of hollow vertical bars (**102** and **104**), wherein the first handle bar **116** is used by a first user to perform body weight exercises. A second handle assembly **118** is removably fastened between each pair of hollow vertical bars (**102, 104, 106** and **108**) at a predetermined position wherein the second handle assembly **118** comprises a second handle bar **120** used by a second user to perform body weight exercises and a support section **122** disposed at distal ends of the second handle bar **120.** The support section **122** is removably fastened across each hollow vertical bar (**102, 104, 106** and **108)** within the pair and the second handle bar **120** is removably attached to the support section **122** via a pin member **130** defining the second handle assembly **118.** The primary function of support section **122** is configured to lift and connect the second handle bar **120** to each hollow vertical bar **(102, 104, 106** and **108)** of the collapsible free standing exercise apparatus **100.**

Referring to **FIG. 1****,** according to the proposed invention, the collapsible free standing exercise apparatus **100** comprises pairs of hollow vertical bars (**102, 104, 106** and **108)** which are the primary components of the apparatus **100.** The hollow vertical bars (**102, 104, 106** and **108**) comprises at least two bars in telescopic engagement with each other to selectively adjust the height of the first handle bar **116** removably fastened to each vertex joint **114** on each pair of hollow vertical bars (**102** and **104**). The hollow vertical bars (**102, 104, 106** and **108**) comprises a height adjustment mechanism **132** defined by plurality of holes that are evenly spaced to adjust the height of the first handle bar **116.** A receiving hole is provided in the hollow vertical bar **102** which matches with that of other hollow vertical bar **106** and a bolt member (not shown) can be inserted to hold them together thereby the height of the first handle bar **116** can be defined. The first handle bar **116** is removably inserted into the vertex joint **114** via a fastening section **146** disposed at distal ends of the vertex joints **114.** The fastening section **146** comprises a plurality of holes to receive an anti-rotation pin **148** to secure the first handle bar **116** to each vertex joint **114** on each pair of hollow vertical bars (**102** and **104**). Whenever, the user wants to adjust the height of the first handle bar **116,** the hollow vertical bars (**102** and **104**) can be pulled out from the other hollow vertical bars (**106** and **108**) and can be placed on the user-defined level via the anti-rotation pin **148.** The first handle bar **116** is primary used for the adults to do their body weight exercises.

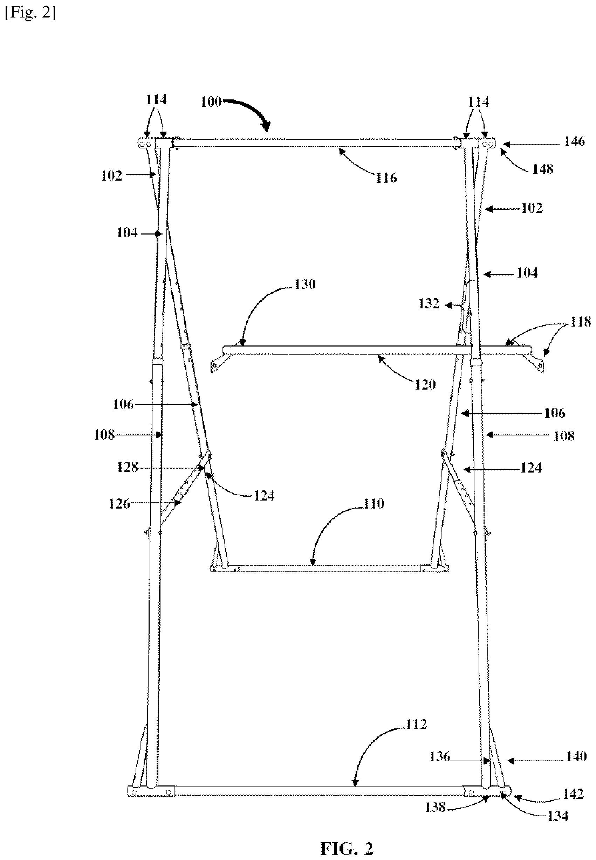

Referring to **FIG. 2****,** which shows a front view of a collapsible free standing exercise apparatus **100** with second handle bar **120** removed from the apparatus **100.** The collapsible free standing exercise apparatus **100** comprises the first handle bar **116,** the second handle bar assembly **118** and a support section **122** to hold the second handle bar **120.** The second handle bar **120** is primarily used for children to do their body weight exercises. However, in an exemplary embodiment, the second handle assembly **118** comprising second handle bar **120** and support section **122** can be removed in case if it is not required for use. The support section **122** comprises three smaller sections that are inserted into each other to make a distance setting wherein the plurality of holes disposed in each of the smaller sections of the support section **122** helps to adjust the length of the support section **122.** Fastening members like bolts are used to fix the smaller sections of the support section **122.**

According to **FIG. 2****,** the collapsible free standing exercise apparatus **100** also comprises an adjustable bar **124** with collapsible sections (**126** and **128**) fixedly fastened to each hollow vertical bar (**102, 104, 106** and **108**) within the pair at another predetermined position to adjust a distance between each hollow vertical bar (**102, 104, 106** and **108)** within the pair. The adjustable bar **124** is configured to have two sections (**126** and **128**) in telescopic engagement and comprises plurality of holes to receive the pin member **130** to selectively adjust the length of the adjustable bar **124** thereby defining the distance between the pair of hollow vertical bars (**102, 104, 106** and **108**). The main function of adjustable bar **124** is to keep the structure of the apparatus **100** rigid on the planar surface whenever the user performs an exercise. The adjustable bar **124** is configured to be fastened to center position of the hollow vertical bars thereby keeping the hollow vertical bars (**106** and **108**) from not moving on any axis. The fastening members like bolts are used in the holes defined in the sections (**126** and **128** ) in telescopic engagement to adjust the length of the adjustable bar **124.** When the user adjusts the height of the first handle bar **116** with respect to desired level without changing the length of the support section **122,** the length of the adjustable bar **124** can be varied flexibly to increase or decrease the height of the first handle bar **116** without affecting the overall structure of the apparatus **100.**

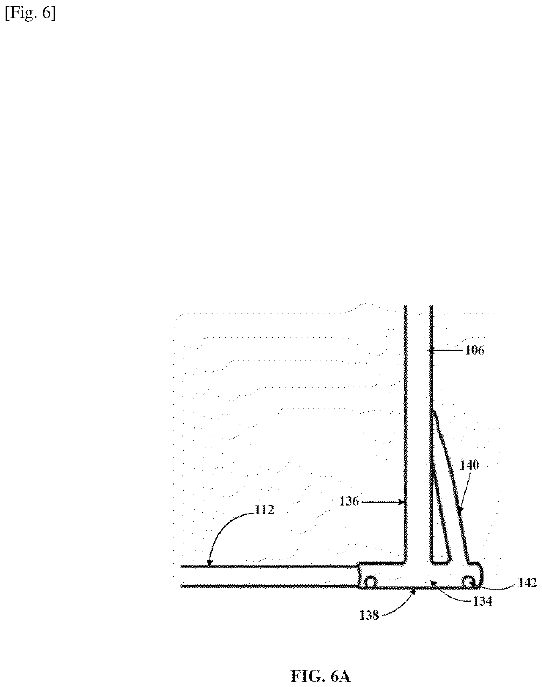

Referring to **FIG. 6****,** a ground engaging cushion member **134** attached to hollow vertical bar **(106** and **108)** and the connector bars (**110** and **112**) of a collapsible free standing exercise apparatus **100** is disclosed. The ground engaging cushion member **134** is fixedly attached to each hollow vertical bar (**106** and **108**) and the connector bars (**110** and **112**), wherein the ground engaging cushion member **134** is configured to compensate the deflection which occurs on each hollow vertical bar (**102, 104, 106** and **108)** when the user performs the exercise. The ground engaging cushion member **134** is configured to provide compressive strength and bending stiffness to withstand the deflection which occurs on each hollow vertical bar (**102, 104, 106** and **108)** when the user performs the exercise. The first connector bar **110** and the second connector bar **112** are configured to have varying dimensions. The ground engaging cushion member **134** are provided to eliminate the horizontal and gravitational forces generated by the movements of the user during the exercise tend to increase and affect the overall structure of the apparatus **100** whenever the user does different body weight exercise like chin-ups and pull ups.

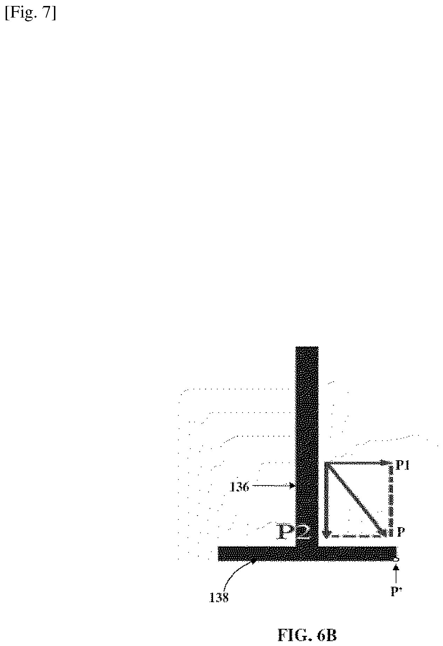

As shown in **FIG. 7****,** the ground engaging cushion member **134** comprises a vertical section **136** and horizontal section **138** wherein a point **P'** on the horizontal section is where the horizontal, gravitational and ground reactive forces act to deflect the structure. Therefore, ground engaging cushion member **134** comprises a force-bearing section **140** fixedly attached at an oblique angle to each hollow vertical bar **(106** and **108)** and the connector bars (**110** and **112**) to define a shape of a triangle specially to take all the horizontal, gravitational and ground reactive forces partially thereby minimizing the forces acting on the point **P** and to reduce the vibrations induced on the structure of the apparatus **100.** The force-bearing section **140** is welded to the vertical section **136** and horizontal section **138** of the ground engaging cushion member **134** to counteract all the horizontal forces as well as the compression force and traction forces effectively. The force-bearing section **140** generates forces to considerably reduce the compression force and traction force which acts on the entire frame. There is a point **P'** on the horizontal section **138** of the ground engaging cushion member **134** by which hollow vertical bars **106** and **108**) of the whole frame bears the most of the force **P** which is combined by the horizontal force **PI** and the gravitation **P2** of the user as shown in **FIG. 7****.** Further a ground reactive force also may act at the point **P'** to resist the force **P.** The more the point **P'** is farther from the hollow vertical bars (**106** and **108** ), the stronger the force **P'** is and the weaker the force **P** is. The bottom surface of force-bearing section **140** which goes inside the connector bars (**110** and **112**) is fastened to the connector bars (**110** and **112**).

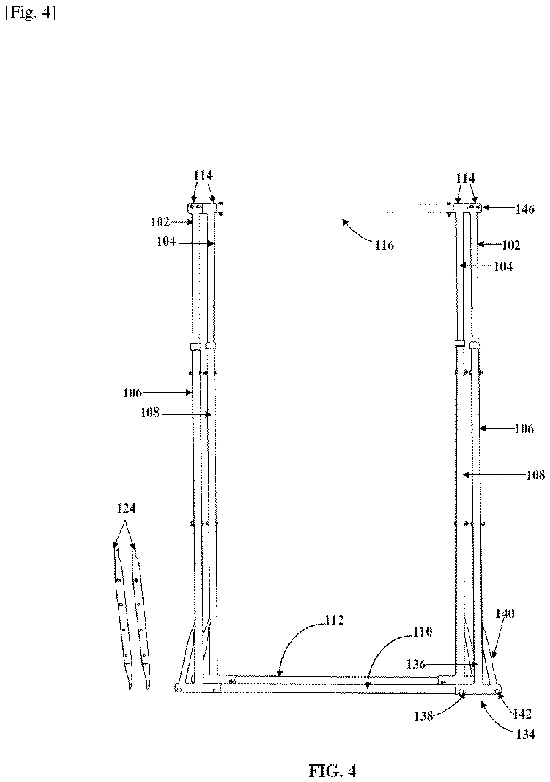

According to **FIG. 4****,** the front view of a collapsible free standing exercise apparatus **100** in folded state, according to an embodiment of the present invention. The connector bars (**110** and **112**) comprise a first connector bar **110** and a second connector bar **112** to adaptably receive and position each hollow vertical bar (**106** and **108**) on the ground surface. The first connector bar **110** and the second connector bar **112** are removably inserted into the ground engaging cushion member **134** attached to each vertical hollow member (**106** and **108**) wherein the plurality of holes **142** defined in the ground engaging cushion member **134** is used to fasten the first connector bar **110** and the second connector bar **112** tightly via the pin member **130.**

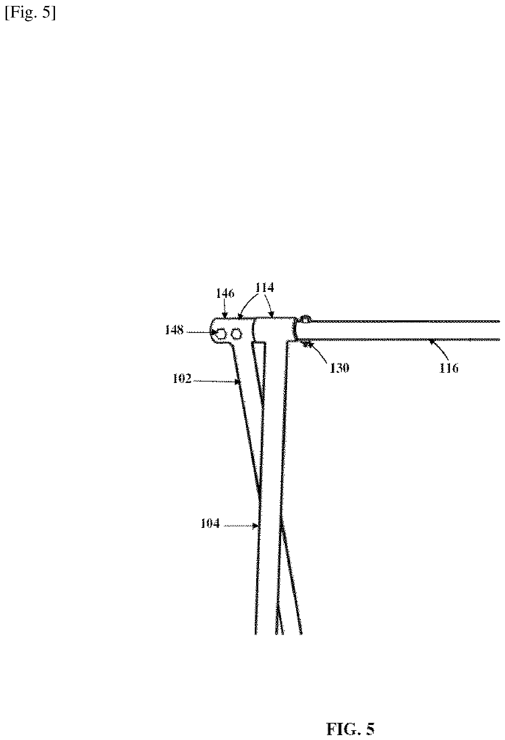

The pin members **130** will not allow the connector bars (**110** and **112**) to move from the ground engaging cushion member **134** and also does not allow the anti-slip cushion member **134** from the structure of the apparatus **100.** As shown in **FIG. 4****,** the first connector bar **110** is made longer than the second connector bar **112** in length as the distance between each hollow vertical bar (**102** and **106**) is larger compared to that of each hollow vertical bar (**104** and **108**) so that the apparatus **100** can be folded easily after removing the support section **122** and adjustable bar **124.** As disclosed in **FIG. 5****,** which shows the front view of hollow vertical bars (**102** and **104**) connected to each other by a vertex joint **114** of a collapsible free standing exercise apparatus **100.** The first handle bar **116** is removably fastened to each vertex joint **114** on each pair of hollow vertical bars (**102** and **104**) via an anti-rotation pin member **148** to prevent the first handle bar **116** to rotate about an axis when the user performs the exercise.

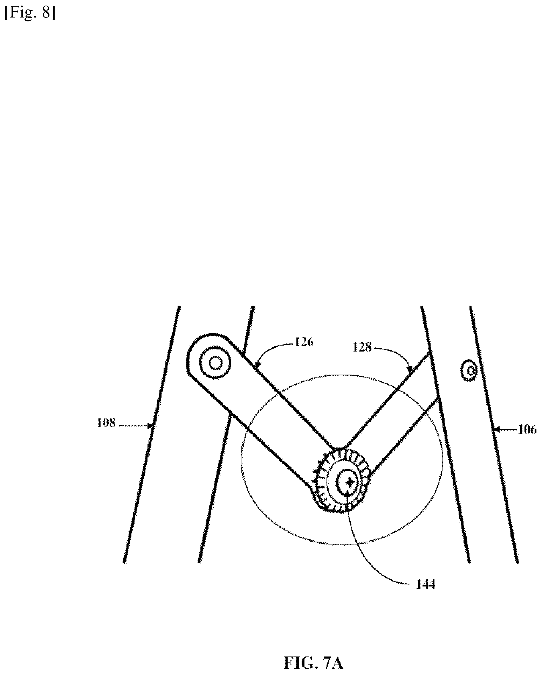

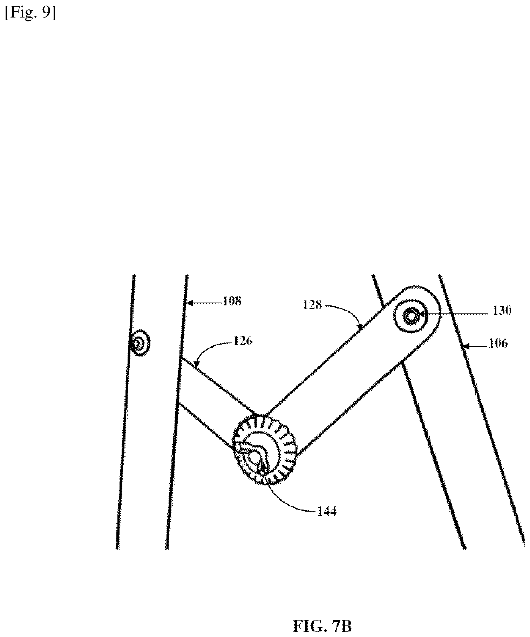

In an exemplary embodiment as shown in **FIG. 8** and **FIG. 9****,** the adjustable bar **124** can be fixedly attached to each hollow vertical bar (**102, 104, 106** and **108**) and comprises collapsible sections (**126** and **128**) that can be folded easily whenever the user folds the apparatus **100** after doing the exercise. A screw member **144** is fixedly attached to the center of collapsible sections (**126** and **128**) so that during the time of folding the apparatus **100,** the user can simply turn the screw **144** to fold the collapsible sections (**126** and **128**) of the adjustable bar **124** without removing the adjustable bar **124** from the frame of the apparatus **100.**

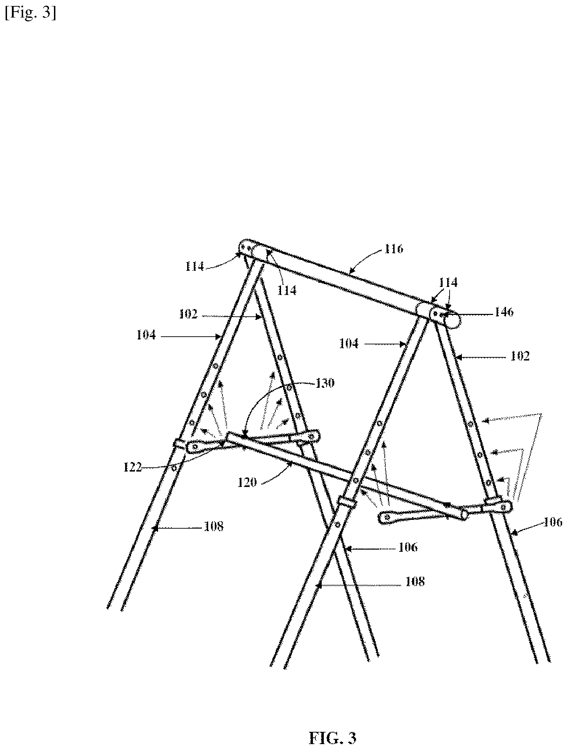

According to **FIG. 3** and referring back to **FIG. 1****,** a method of assembling a collapsible free standing exercise apparatus **100** for use is disclosed. The method comprises the steps of removably fastening a pair of hollow vertical bars (**102, 104, 106** and **108**) separated at a predetermined distance via a connector bars (**110** and **112**), wherein the hollow vertical bars (**102, 104, 106** and **108**) are inclined to each other within the pair, wherein an upper vertex joint **114** is defined between each hollow vertical bar (**102** and **104**) and removably fastening a first handle bar **116** to each vertex joint **114** on each pair of hollow vertical bars (**102** and **104**), wherein the first handle bar **116** is used by a first user to perform body weight exercises. The method further comprises removably fastening a second handle assembly **118** between each pair of hollow verticalbars (**102, 104, 106** and **108**) at a predetermined position, wherein the second handle assembly **118** comprises a second handle bar **120** used by a second user to perform body weight exercises.

A support section **122** is disposed at distal ends of the second handle bar **120,** wherein the support section **122** is removably fastened across each hollow vertical bar (**102, 104, 106** and **108**) within the pair and fixedly fastening adjustable bar **124** with collapsible sections (**126** and **128**) to each hollow vertical bar (**102, 104, 106** and **108**) within the pair at another predetermined position to adjust a distance between each hollow vertical bar (**102, 104, 106** and **108**) within the pair. The method further comprises fastening each hollow vertical bar (**102** and **104**) to the upper vertex joint **114** via an anti-rotation pin member **130** to prevent the first handle bar **116** to rotate about an axis when the user performs the exercise.

The connector bars (**110** and **112**) are inserted into the ground engaging cushion member **134** and fastening via the pin member **130** to firmly place the exercise apparatus **100** on a planar surface and fixedly attaching a ground engaging cushion member **134** to each hollow vertical bar (**106** and **108**) and the connector bars (**110** and **112**) to compensate the deflection which occurs on each hollow vertical bar (**102, 104, 106** and **108**) when the user performs the exercise. A force-bearing section **140** is fixedly attached to each hollow vertical bar (**106** and **108**) and the connector bars (**110** and **112**) at an oblique angle to compensate the horizontal and traction forces generated by the hollow vertical bars (**102, 104, 106** and **108**) and the connector bars (**110** and **112**). Fastening member like bolts can be used on all sections of the apparatus **100** wherever the tightening of the components is required to assemble the apparatus **100.**

Referring back to **FIG. 3****,** the method also comprises plurality of fastening members used for matching the different holes positioned in each hollow vertical bar (**102, 104, 106** and **108**) is selected from at least one of a bolt, nut, screw and pin. In an exemplary embodiment, the user can adjust all the bars and sections of the apparatus **100** based on their requirements. For example, for shorter users, each of the smaller sections of the support section **122** are adaptively positioned on each hollow vertical bar (**102, 104, 106** and **108**) according to the position of their hand when it reaches the second handle bar **120.** In some cases, if the user wants to change the height slightly to do the exercise flexibly, the user can fix any one of the smaller sections of the support section **122** to define the distance setting between each hollow vertical bar (**102, 104, 106** and **108**). The A-shaped frame of the apparatus **100** can also be changed accordingly when the adjustable bar **124** and it collapsible sections (**126** and **128**) are adjusted and matched with their holes using the pin member **130.**

The collapsible free standing exercise apparatus **100**, according to the proposed invention, user can easily adjust the height of both the first handle bar **116** and second handle bar **120** without the help of a spanner and therefore the apparatus **100** can be meet the requirements of many users at all ages with many different heights. The higher user or adults can use the first handle bar **116** and shorter user such as children or woman can use the second handle bar **120** whenever needed. The user can remove the second handle bar **120** when it is not needed with the help of easily adjustable second handle bar assembly **118.** Also the apparatus **100** is portable can be used in a confined space and user can set up the apparatus **100** very easily with the help of removably attached handle bars (**116** and **120**), connector bars (**110** and **112**), support section **122** and adjustable bars **124.** The flexible adjustable bars **124** are easily collapsible and therefore user can fold the whole apparatus **100** by turning the screw **144** and pulling the collapsible sections (**126** and **128**) of the adjustable bars **124.** The ground engaging cushion members **134** in the apparatus **100** provided stability and strength against the counteracting forces.

### Citation List

### Patent Literature

PTL 1:

### Non Patent Literature

NPL 1:

## Claims

1. A collapsible free standing exercise apparatus (100), the apparatus comprising:
- first and second pairs of first and second hollow vertical bars (102, 104, 106, 108), the first pair of hollow vertical bars separated from the second pair of hollow vertical bars by a predetermined distance via first and second connector bars (110, 112), the first connector bar removably fastened at a lower portion of the first hollow vertical bar of the first pair and the first hollow vertical bar of the second pair and the second connector bar removably fastened at a lower portion of the second vertical bar of the first pair and the second vertical bar of the second pair, wherein the first and second hollow vertical bars of the first pair are inclined to each other and the first and second hollow vertical bars of the second pair are inclined to each other, wherein a first upper vertex joint (114) is defined on the first and second hollow vertical bars of the first pair and wherein a second upper vertex joint is defined on the first and second hollow vertical bars of the second pair;
- a first handle bar (116) removably fastened to each of the first and second upper vertex joints, wherein the first handle bar is usable by a first user to perform body weight exercises;
- a second handle assembly (118) removably fastened between the first and second pairs of first and second hollow vertical bars at a predetermined position, wherein the second handle assembly comprises:
- a second handle bar (120), wherein the second handle bar is usable by a second user to perform body weight exercises;
- first and second support sections (122) respectively disposed at distal ends of the second handle bar, wherein the first support section is removably fastened across the first and second hollow vertical bars of the first pair and the second support section is removably fastened across the first and second hollow vertical bars of the second pair;
wherein each hollow vertical bar comprises a height adjusting mechanism (132) to selectively adjust the position of the second handle assembly on the hollow vertical bars;
wherein each support section comprises a plurality of smaller sections slidable into each other, wherein the smaller sections are fastened to adjust the length of the support section; and
- first and second adjustable bars (124) with collapsible sections (126, 128), the first adjustable bar removably fastened to the first and second hollow vertical bars of the first pair and the second adjustable bar removably fastened to the first and second hollow vertical bars of the second pair at another predetermined position to adjust a distance between the first and second hollow vertical bars within each pair, wherein each adjustable bar comprises plurality of holes to receive a pin member (130) to selectively adjust the length of the adjustable bar, wherein the distance between the first and second hollow vertical bar within the first and second pairs is adjusted.

2. The collapsible free standing exercise apparatus of claim 1, wherein first and second fastening sections (146) are respectively disposed at distal ends of the first and second upper vertex joints.

3. The collapsible free standing exercise apparatus of claim 2, wherein the fastening sections each comprise a plurality of holes to receive and secure the first handle bar to the first and second upper vertex joints.

4. The collapsible free standing exercise apparatus of claim 1, wherein the support section comprises first and second pin members to fasten the second handle bar to the first and second support sections.

5. The collapsible free standing exercise apparatus of claim 1, wherein a ground engaging cushion member (134) is fixedly attached to each hollow vertical bar and the first and second connector bars.

6. The collapsible free standing exercise apparatus of claim 5, wherein each ground engaging cushion member further comprises a force-bearing section (140) fixedly attached at an oblique angle to a respective hollow vertical bar to define a shape of a triangle, wherein each ground engaging cushion member has an end of a respective one of the first and second connecter bars inserted therein.

7. The collapsible free standing exercise apparatus of claim 1, wherein the first connector bar and the second connector bar are configured to have varying dimensions.

8. The collapsible free standing exercise apparatus of claim 1, wherein each hollow vertical bar comprises at least two bars (104, 108, 102, 106) in telescopic engagement with each other to selectively adjust the height of the first handle bar.

9. The collapsible free standing exercise apparatus of claim 1, wherein the first handle bar is removably fastened to the first and second upper vertex joints via an anti-rotation pin member (148) to prevent the first handle bar to rotate about an axis when the user performs the exercise.

10. A method of assembling a collapsible free standing exercise apparatus (100) for use, the method comprising:
- removably fastening first and second pairs of first and second hollow vertical bars (102, 104, 106, 108), the first pair separated by a predetermined distance from the second pair via first and second connector bars (110, 112), the first connector bar removably fastened at a lower portion of the first hollow vertical bar of the first pair and the first hollow vertical bar of the second pair and the second connector bar removably fastened at a lower portion of the second vertical bar of the first pair and the second vertical bar of the second pair, wherein the first and second hollow vertical bars of the first pair are inclined to each other and the first and second hollow vertical bars of the second pair are inclined to each other, wherein a first upper vertex joint (114) is defined on the first and second hollow vertical bars of the first pair and wherein a second upper vertex joint is defined on the first and second hollow vertical bars of the second pair;
- removably fastening a first handle bar (116) to each of the first and second upper vertex joints, wherein the first handle bar is usable by a first user to perform body weight exercises;
- removably fastening a second handle assembly (118) between the first and second pairs of first and second hollow vertical bars at a predetermined position, wherein the second handle assembly comprises;
- a second handle bar (120), wherein the second handle bar is usable by a second user to perform body weight exercises;
- first and second support sections (122) respectively disposed at distal ends of the second handle bar, wherein the first support section is removably fastened across first and second hollow vertical bars of the first pair and the second support section is removably fastened across the first and second hollow vertical bars of the second pair;
wherein each hollow vertical bar comprises a height adjusting mechanism (132) to selectively adjust the position of the second handle assembly on the hollow vertical bars;
wherein each support section comprises a plurality of smaller sections slidable into each other, wherein the smaller sections are fastened to adjust the length of the support section; and
removably fastening a first adjustable bar (124) with collapsible sections to the first and second hollow vertical bars of the first pair and removably fastening a second adjustable bar (124) with collapsible sections to the first and second hollow vertical bars of the second pair at another predetermined position to adjust a distance between each hollow vertical bar within the pair, wherein each adjustable bar comprises plurality of holes to receive a pin member (130) to selectively adjust the length of adjustable bar, wherein the distance between the first and second hollow vertical bars within the first and second pairs is adjusted.

11. The method of claim 10, wherein the method comprises removably fastening the first handle bar to the first and second upper vertex joints via an anti-rotation pin member (148) to prevent the first handle bar to rotate about an axis when the user performs the exercise.

12. The method of claim 10, comprising fixedly attaching a ground engaging cushion member (134) to each hollow vertical bar and the first and second connector bars to compensate the deflection which occurs on each hollow vertical bar when the user performs the exercise.

13. The method of claim 10, comprising inserting the connector bars into a ground engaging cushion member (134) and fastening via a pin member to firmly place the exercise apparatus on a planar surface.

14. The method of claim 10, comprising fixedly attaching a force-bearing section (140) to each hollow vertical bar at an oblique angle to compensate the horizontal and traction forces generated by the hollow vertical bars and the connector bars.

## Patentansprüche

1. Zusammenklappbare freistehende Übungsvorrichtung (100), wobei die Vorrichtung umfasst:
- ein erstes und ein zweites Paar von ersten und zweiten hohlen vertikalen Stangen (102, 104, 106, 108), wobei bei den ersten und zweiten Paaren von ersten und zweiten hohlen vertikalen Stangen (102, 104, 106, 108) das erste Paar hohler vertikaler Stangen durch einen vorbestimmten Abstand von dem zweiten Paar hohler vertikaler Stangen über eine erste bzw. eine zweite Verbindungsstange (110, 112) getrennt ist, wobei die erste Verbindungsstange an einem unteren Abschnitt der ersten hohlen vertikalen Stange des ersten Paares und der ersten hohlen vertikalen Stange des zweiten Paares entfernbar befestigt ist, und die zweite Verbindungsstange an einem unteren Abschnitt der zweiten vertikalen Stange des ersten Paares und der zweiten vertikalen Stange des zweiten Paares entfernbar befestigt ist,
wobei die ersten und zweiten hohlen vertikalen Stangen des ersten Paares zueinander geneigt sind und die ersten und zweiten hohlen vertikalen Stangen des zweiten Paares zueinander geneigt sind, wobei ein erstes oberes Scheitelgelenk (114) an den ersten und zweiten hohlen vertikalen Stangen des ersten Paares definiert ist, und wobei ein zweites oberes Scheitelgelenk an der ersten und zweiten hohlen vertikalen Stangen des zweiten Paares definiert ist;
- einen ersten Haltegriff (116), der entfernbar an jedem der ersten und zweiten oberen Scheitelgelenke befestigt ist, wobei der erste Haltegriff von einem ersten Benutzer zur Ausführung von Körpergewichtsübungen verwendet werden kann;
- eine zweite Griffanordnung (118), die entfernbar zwischen dem ersten und dem zweiten Paar der ersten und zweiten hohlen vertikalen Stangen an einer vorbestimmten Position befestigt ist, wobei die zweite Griffanordnung umfasst:
- einen zweiten Haltegriff (120), wobei der zweite Haltegriff von einem zweiten Benutzer verwendet werden kann, um Körpergewichtsübungen auszuführen;
- erster und zweiter Stützabschnitte (122), die jeweils an distalen Enden des zweiten Haltegriffs angeordnet sind, wobei der erste Stützabschnitt entfernbar über den ersten und zweiten hohlen vertikalen Stangen des ersten Paares befestigt ist und der zweite Stützabschnitt entfernbar über den ersten und zweiten hohlen vertikalen Stangen des zweiten Paares befestigt ist;
wobei jede hohle vertikale Stange einen Höheneinstellmechanismus (132) umfasst, um selektiv die Position der zweiten Griffanordnung an den hohlen vertikalen Stangen einzustellen;
wobei jeder Stützabschnitt mehrere ineinander verschiebbare kleinere Abschnitte umfasst, wobei die kleineren Abschnitte befestigt sind, um die Länge des Stützabschnitts einzustellen; und
- eine erste und eine zweite verstellbare Stange (124) mit zusammenklappbaren Abschnitten (126, 128), wobei die erste verstellbare Stange abnehmbar an den ersten und zweiten hohlen vertikalen Stangen des ersten Paares und die zweite verstellbare Stange abnehmbar an den ersten und zweiten hohlen vertikalen Stangen des zweiten Paares an einer anderen vorbestimmten Position befestigt ist, um einen Abstand zwischen den ersten und zweiten hohlen vertikalen Stangen mit jedem Paar einzustellen, wobei jede einstellbare Stange eine Vielzahl von Löchern aufweist, um ein Stiftelement (130) aufzunehmen, um selektiv die Länge der einstellbaren Stange einzustellen, wobei der Abstand zwischen der ersten und der zweiten hohlen vertikalen Stange innerhalb des ersten und zweiten Paares eingestellt wird.

2. Zusammenklappbare freistehende Übungsvorrichtung nach Anspruch 1, wobei der erste und der zweite Befestigungsabschnitt (146) jeweils an den distalen Enden der ersten und zweiten oberen Scheitelgelenke angeordnet sind.

3. Zusammenklappbare freistehende Übungsvorrichtung nach Anspruch 2, wobei die Befestigungsabschnitte jeweils eine Vielzahl von Löchern umfassen, um den ersten Haltegriff an den ersten und zweiten oberen Scheitelgelenken aufzunehmen und zu sichern.

4. Zusammenklappbare freistehende Übungsvorrichtung nach Anspruch 1, wobei der Stützabschnitt erste und zweite Stiftelemente umfasst, um den zweiten Haltegriff an dem ersten bzw. zweiten Stützabschnitt zu befestigen.

5. Zusammenklappbare freistehende Übungsvorrichtung nach Anspruch 1, wobei ein bodeneingreifender Kissenelement (134) fest an jeder hohlen vertikalen Stange und den ersten und zweiten Verbindungsstangen angebracht ist.

6. Zusammenklappbare freistehende Übungsvorrichtung nach Anspruch 5, wobei jedes bodeneingreifende Kissenelement ferner einen krafttragenden Abschnitt (140) umfasst, der fest in einem schrägen Winkel an einer jeweiligen hohlen vertikalen Stange befestigt ist, um eine Form eines Dreiecks zu definieren, wobei jedes bodeneingreifende Kissenelement ein Ende einer jeweiligen der ersten und zweiten Verbindungsstangen, die darin eingesetzt sind, aufweist.

7. Zusammenklappbare freistehende Übungsvorrichtung nach Anspruch 1, wobei die erste Verbindungsstange und die zweite Verbindungsstange derart konfiguriert sind, dass sie unterschiedliche Abmessungen aufweisen.

8. Zusammenklappbare freistehende Übungsvorrichtung nach Anspruch 1, wobei jede hohle vertikale Stange mindestens zwei Stangen (104, 108, 102, 106) in teleskopischem Eingriff miteinander umfasst, um die Höhe des ersten Haltegriffs selektiv einzustellen.

9. Zusammenklappbare freistehende Übungsvorrichtung nach Anspruch 1, wobei der erste Lenker entfernbar an den ersten und zweiten oberen Scheitelgelenken über ein Antirotationsstiftelement (148) befestigt ist, um zu verhindern, dass sich der erste Haltegriff um eine Achse dreht, wenn der Benutzer die Übung ausführt.

10. Verfahren zum Zusammenbau einer zu verwendbaren zusammenklappbaren freistehenden Übungsvorrichtung (100), wobei das Verfahren umfasst:
- ein entfernbares Befestigen des ersten Paares und des zweiten Paares der ersten und zweiten hohlen vertikalen Stangen (102, 104, 106, 108), wobei das erste Paar durch vorbestimmte Abstände vom zweiten Paar über die erste und zweite Verbindungsstange (110, 112) getrennt ist, wobei die erste Verbindungsstange abnehmbar an einem unteren Abschnitt der ersten hohlen vertikalen Stange des ersten Paares und der ersten hohlen vertikalen Stange des zweiten Paares befestigt ist, und wobei die zweite Verbindungsstange entfernbar an einem unteren Abschnitt der zweiten vertikalen Stange des ersten Paares und der zweiten vertikalen Stange des zweiten Paares befestigt ist; wobei die erste und zweite hohle vertikale Stange des ersten Paares zueinander geneigt sind und die erste und zweite hohle vertikale Stange des zweiten Paares zueinander geneigt sind, wobei ein erstes oberes Scheitelgelenk (114) auf den ersten und zweiten hohlen vertikalen Stangen des ersten Paares definiert ist, und wobei ein zweites oberes Scheitelgelenk auf den ersten und zweiten hohlen vertikalen Stangen des zweiten Paares definiert ist;
- ein entfernbares Befestigen eines ersten Haltegriffes (116) an jedem der ersten und zweiten oberen Scheitelgelenke, wobei der erste Haltegriff von einem ersten Benutzer zur Ausführung von Körpergewichtsübungen verwendet werden kann;
- ein entfernbares Befestigen einer zweiten Griffanordnung (118) zwischen dem ersten und dem zweiten Paar von ersten und zweiten hohlen vertikalen Stangen an einer vorbestimmten Position, wobei die zweite Griffanordnung umfasst:
- einen zweiten Haltegriff (120), wobei der zweite Haltegriff von einem zweiten Benutzer verwendet werden kann, um Körpergewichtsübungen auszuführen;
- einen ersten und einen zweiten Stützabschnitt (122), die jeweils an distalen Enden des zweiten Haltegriffes angeordnet sind, wobei der erste Stützabschnitt entfernbar über der ersten und zweiten hohlen vertikalen Stange des ersten Paares befestigt ist, und der zweite Stützabschnitt entfernbar über der ersten und zweiten hohlen vertikalen Stange des zweiten Paares befestigt ist; wobei jede hohle vertikale Stange einen Höheneinstellmechanismus (132) umfasst, um selektiv die Position der zweiten Griffanordnung an den hohlen vertikalen Stangen einzustellen; wobei jeder Stützabschnitt mehrere ineinander verschiebbare kleinere Abschnitte umfasst, wobei die kleineren Abschnitte befestigt sind, um die Länge des Stützabschnitts einzustellen; und
- ein entfernbares Befestigen einer ersten einstellbaren Stange (124) mit zusammenklappbaren Abschnitten an der ersten und zweiten hohlen vertikalen Stange des ersten Paares und ein entfernbares Befestigen einer zweiten verstellbaren Stange (124) mit zusammenklappbaren Abschnitten an der ersten und zweiten hohlen vertikalen Stange des zweiten Paares an einer anderen vorbestimmten Position, um einen Abstand zwischen jeder hohlen vertikalen Stange innerhalb des Paares einzustellen, wobei jede einstellbare Stange eine Vielzahl von Löchern aufweist, um ein Stiftelement (130) aufzunehmen, um selektiv die Länge der einstellbaren Stange einzustellen, wobei der Abstand zwischen der ersten und der zweiten hohlen vertikalen Stange innerhalb des ersten und zweiten Paares eingestellt wird.

11. Verfahren nach Anspruch 10, wobei das Verfahren das abnehmbare Befestigen des ersten Haltegriffes an den ersten und zweiten oberen Scheitelgelenken über ein Anti-Rotations-Stiftelement (148) aufweist, um zu verhindern, dass sich der erste Haltegriff um eine Achse dreht, wenn der Benutzer die Übung ausführt.

12. Verfahren nach Anspruch 10, umfassend das feste Anbringen eines bodeneingreifenden Kissenelements (134) an jeder hohlen vertikalen Stange und der ersten und zweiten Verbindungsstangen, um die Auslenkung, die an jeder hohlen vertikalen Stange auftritt, wenn der Benutzer die Übung ausführt, zu kompensieren.

13. Verfahren nach Anspruch 10, umfassend ein Einführen der Verbindungsstangen in ein bodeneingreifendes Kissenelement (134) und ein Befestigen über ein Stiftelement, um die Übungsvorrichtung fest auf einer ebenen Oberfläche zu platzieren.

14. Verfahren nach Anspruch 10, umfassend ein festes Anbringen eines krafttragenden Abschnitts (140) an jeder hohlen vertikalen Stange in einem schrägen Winkel, um die von den hohlen vertikalen Stangen und den Verbindungsstangen erzeugten horizontalen und Zugkräfte zu kompensieren.

## Revendications

1. Appareil d'exercice autonome pliant (100), l'appareil comprenant :
- des première et seconde paires de première et seconde barres verticales creuses (102, 104, 106, 108), la première paire de barres verticales creuses étant séparée de la seconde paire de barres verticales creuses d'une distance prédéterminée via des première et seconde barres de raccordement (110, 112), la première barre de raccordement étant fixée amovible au niveau d'une portion inférieure de la première barre verticale creuse de la première paire et de la première barre verticale creuse de la seconde paire et la seconde barre de raccordement étant fixée amovible au niveau d'une portion inférieure de la seconde barre verticale de la première paire et de la seconde barre verticale de la seconde paire, dans lequel les première et seconde barres verticales creuses de la première paire sont inclinées l'une par rapport à l'autre et les première et seconde barres verticales creuses de la seconde paire sont inclinées l'une par rapport à l'autre, dans lequel une première articulation de sommet supérieure (114) est définie sur les première et seconde barres verticales creuses de la première paire et dans lequel une seconde articulation de sommet supérieure est définie sur les première et seconde barres verticales creuses de la seconde paire ;
- une première barre de poignée (116) fixée amovible à chacune des première et seconde articulations de sommet supérieures, dans lequel la première barre de poignée est utilisable par un premier utilisateur pour effectuer des exercices sans charge ;
- un second ensemble poignée (118) fixé amovible entre les première et seconde paires de première et seconde barres verticales creuses à une position prédéterminée, dans lequel le second ensemble poignée comprend :
- une seconde barre de poignée (120), dans lequel la seconde barre de poignée est utilisable par un second utilisateur pour effectuer des exercices sans charge ;
- des première et seconde sections de support (122) disposées respectivement à des extrémités distales de la seconde barre de poignée, dans lequel la première section de support est fixée amovible à travers les première et seconde barres verticales creuses de la première paire et la seconde section de support est fixée amovible à travers les première et seconde barres verticales creuses de la seconde paire ;
dans lequel chaque barre verticale creuse comprend un mécanisme de réglage de hauteur (132) pour régler sélectivement la position du second ensemble poignée sur les barres verticales creuses ;
dans lequel chaque section de support comprend une pluralité de sections plus petites pouvant coulisser les unes dans les autres, dans lequel les sections plus petites sont fixées pour régler la longueur de la section de support ; et
- des première et seconde barres réglables (124) avec des sections pliantes (126, 128), la première barre réglable étant fixée amovible aux première et seconde barres verticales creuses de la première paire et la seconde barre réglable étant fixée amovible aux première et seconde barres verticales creuses de la seconde paire à une autre position prédéterminée pour régler une distance entre les première et seconde barres verticales creuses au sein de chaque paire, dans lequel chaque barre réglable comprend une pluralité de trous pour recevoir un organe goupille (130) afin de régler sélectivement la longueur de la barre réglable, dans lequel la distance entre les première et seconde barres verticales creuses au sein des première et seconde paires est réglée.

2. Appareil d'exercice autonome pliant selon la revendication 1, dans lequel des première et seconde sections de fixation (146) sont disposées respectivement à des extrémités distales des première et seconde articulations de sommet supérieures.

3. Appareil d'exercice autonome pliant selon la revendication 2, dans lequel les sections de fixation comprennent chacune une pluralité de trous pour recevoir et arrimer la première barre de poignée aux première et seconde articulations de sommet supérieures.

4. Appareil d'exercice autonome pliant selon la revendication 1, dans lequel la section de support comprend des premier et second organes goupilles pour fixer la seconde barre de poignée aux première et seconde sections de support.

5. Appareil d'exercice autonome pliant selon la revendication 1, dans lequel un organe coussin d'engagement avec le sol (134) est fixé de manière solidaire à chaque barre verticale creuse et aux première et seconde barres de raccordement.

6. Appareil d'exercice autonome pliant selon la revendication 5, dans lequel chaque organe coussin d'engagement avec le sol comprend en outre une section de résistance à une force (140) fixée de manière solidaire selon un angle oblique à une barre verticale creuse respective pour définir une forme d'un triangle, dans lequel chaque organe coussin d'engagement avec le sol a une extrémité d'une barre respective des première et seconde barres de raccordement insérée dedans.

7. Appareil d'exercice autonome pliant selon la revendication 1, dans lequel la première barre de raccordement et la seconde barre de raccordement sont configurées pour avoir des dimensions variables.

8. Appareil d'exercice autonome pliant selon la revendication 1, dans lequel chaque barre verticale creuse comprend au moins deux barres (104, 108, 102, 106) en engagement télescopique l'une avec l'autre pour régler sélectivement la hauteur de la première barre de poignée.

9. Appareil d'exercice autonome pliant selon la revendication 1, dans lequel la première barre de poignée est fixée amovible aux première et seconde articulations de sommet supérieures via un organe goupille anti-rotation (148) pour empêcher la première barre de poignée de tourner autour d'un axe lorsque l'utilisateur effectue l'exercice.

10. Procédé d'assemblage d'un appareil d'exercice autonome pliant (100) pour son utilisation, le procédé comprenant :
- la fixation amovible de première et seconde paires de première et seconde barres verticales creuses (102, 104, 106, 108), la première paire étant séparée d'une distance prédéterminée de la seconde paire via des première et seconde barres de raccordement (110, 112), la première barre de raccordement étant fixée amovible au niveau d'une portion inférieure de la première barre verticale creuse de la première paire et de la première barre verticale creuse de la seconde paire et la seconde barre de raccordement étant fixée amovible au niveau d'une portion inférieure de la seconde barre verticale de la première paire et de la seconde barre verticale de la seconde paire, dans lequel les première et seconde barres verticales creuses de la première paire sont inclinées l'une par rapport à l'autre et les première et seconde barres verticales creuses de la seconde paire sont inclinées l'une par rapport à l'autre, dans lequel une première articulation de sommet supérieure (114) est définie sur les première et seconde barres verticales creuses de la première paire et dans lequel une seconde articulation de sommet supérieure est définie sur les première et seconde barres verticales creuses de la seconde paire ;
- la fixation amovible d'une première barre de poignée (116) à chacune des première et seconde articulations de sommet supérieures, dans lequel la première barre de poignée est utilisable par un premier utilisateur pour effectuer des exercices sans charge ;
- la fixation amovible d'un second ensemble poignée (118) entre les première et seconde paires de première et seconde barres verticales creuses à une position prédéterminée, dans lequel le second ensemble poignée comprend ;
- une seconde barre de poignée (120), dans lequel la seconde barre de poignée est utilisable par un second utilisateur pour effectuer des exercices sans charge ;
- des première et seconde sections de support (122) disposées respectivement à des extrémités distales de la seconde barre de poignée, dans lequel la première section de support est fixée amovible à travers des première et seconde barres verticales creuses de la première paire et la seconde section de support est fixée amovible à travers les première et seconde barres verticales creuses de la seconde paire ;
dans lequel chaque barre verticale creuse comprend un mécanisme de réglage de hauteur (132) pour régler sélectivement la position du second ensemble poignée sur les barres verticales creuses ;
dans lequel chaque section de support comprend une pluralité de sections plus petites pouvant coulisser les unes dans les autres, dans lequel les sections plus petites sont fixées pour régler la longueur de la section de support ; et
la fixation amovible d'une première barre réglable (124) avec des sections pliantes aux première et seconde barres verticales creuses de la première paire et la fixation amovible d'une seconde barre réglable (124) avec des sections pliantes aux première et seconde barres verticales creuses de la seconde paire à une autre position prédéterminée pour régler une distance entre chaque barre verticale creuse au sein de la paire, dans lequel chaque barre réglable comprend une pluralité de trous pour recevoir un organe goupille (130) afin de régler sélectivement la longueur de la barre réglable, dans lequel la distance entre les première et seconde barres verticales creuses au sein des première et seconde paires est réglée.

11. Procédé selon la revendication 10, dans lequel le procédé comprend la fixation amovible de la première barre de poignée aux première et seconde articulations de sommet supérieures via un organe goupille anti-rotation (148) pour empêcher la première barre de poignée de tourner autour d'un axe lorsque l'utilisateur effectue l'exercice.

12. Procédé selon la revendication 10, comprenant la fixation de manière solidaire d'un organe coussin d'engagement avec le sol (134) à chaque barre verticale creuse et aux première et seconde barres de raccordement pour compenser la flèche qui se produit sur chaque barre verticale creuse lorsque l'utilisateur effectue l'exercice.

13. Procédé selon la revendication 10, comprenant l'insertion des barres de raccordement dans un organe coussin d'engagement avec le sol (134) et la fixation via un organe goupille pour placer fermement l'appareil d'exercice sur une surface plane.

14. Procédé selon la revendication 10, comprenant la fixation de manière solidaire d'une section de résistance à une force (140) à chaque barre verticale creuse selon un angle oblique pour compenser les forces horizontale et de traction générées par les barres verticales creuses et les barres de raccordement.
